# EUROPEAN PATENT APPLICATION

(11) **EP 3 572 935 A1**
(43) Date of publication of application: **27.11.2019**
(21) Application number: 19173792.3
(22) Date of filing: 10.05.2019
(51) Int. Cl.: G06F 9/445, G06F 3/0483, G06F 3/0488

(54) **METHOD FOR PRELOADING APPLICATION, STORAGE MEDIUM, AND TERMINAL**

(30) Priority: 21.05.2018 CN 201810489418
(71) Applicant: Guangdong Oppo Mobile Telecommunications Corp., Ltd, Dongguan, Guangdong 523860 (CN)
(72) Inventor: HAN, Shiguang, Dongguan, Guangxi 523860 (CN); CHEN, Yan, Dongguan, Guangdong (CN)
(74) Representative: Manitz Finsterwald Patent- und Rechtsanwaltspartnerschaft mbB

(57) **Abstract**

A method and an apparatus for preloading an application, a storage medium, and a terminal are provided. The method includes the following. First, a target interface corresponding to a sliding operation is determined in response to detecting that the sliding operation is on an interface. Then an application with a highest preloading priority is determined from applications in the target interface as a target application. At last, the target application is preloaded.

## Description

### TECHNICAL FIELD

This disclosure relates to the technical field of terminals, and more particularly to a method for preloading an application, a storage medium, and a terminal.

### BACKGROUND

With development of terminals, in which more and more applications have been installed, users' requirements for speed of launching an application are gradually increasing.

Currently, the user triggers launching of an application by entering an interface having an application icon of the application displayed thereon through a sliding operation and clicking the application icon, or by clicking a notification message in a lock-screen interface. As loading of the application takes a long time, the user still needs to wait to enter an application interface after the launching of the application is triggered. In addition, the user cannot use other system resources of the terminal during loading of the application, which results in low utilization rate of system resources.

### SUMMARY

A first aspect of the disclosure provides a method for preloading an application. The method includes the following.

A target interface corresponding to a sliding operation is determined in response to detecting that the sliding operation is on an interface. An application with a highest preloading priority is determined from applications in the target interface as a target application. The target application is preloaded.

A second aspect of the disclosure provides a terminal. The terminal includes at least one processor and a computer readable storage. The computer readable storage is coupled to the at least one processor and stores at least one computer executable instruction thereon which, when executed by the at least one processor, causes the at least one processor to carry out the following actions.

A target interface corresponding to a sliding operation is determined in response to detecting that the sliding operation is on an interface. An application with a highest preloading priority is determined from applications in the target interface as a target application. The target application is preloaded.

A third aspect of the disclosure provides a non-transitory computer readable storage medium. The non-transitory computer readable storage medium is configured to store a computer program which, when executed by a processor, causes the processor to carry out the following.

A target interface corresponding to a sliding operation is determined in response to detecting that the sliding operation is on an interface. An application with a highest preloading priority is determined from applications in the target interface as a target application. The target application is preloaded.

### BRIEF DESCRIPTION OF THE DRAWINGS

FIG. 1 is a flowchart illustrating a method for preloading an application according to an implementation of the present disclosure.
FIG. 2 is a flowchart illustrating another method for preloading an application according to an implementation of the present disclosure.
FIG. 3 is a flowchart illustrating another method for preloading an application according to an implementation of the present disclosure.
FIG. 4 is a flowchart illustrating another method for preloading an application according to an implementation of the present disclosure.
FIG. 5 is a flowchart illustrating another method for preloading an application according to an implementation of the present disclosure.
FIG. 6 is a flowchart illustrating another method for preloading an application according to an implementation of the present disclosure.
FIG. 7 is a schematic structural diagram illustrating an apparatus for preloading an application according to an implementation of the present disclosure.
FIG. 8 is a schematic structural diagram illustrating a terminal according to an implementation of the present disclosure.

### DETAILED DESCRIPTION

Technical solutions of the disclosure will be further described below through implementations with reference to the accompanying drawings. It will be appreciated that the implementations are described herein for the purpose of explaining the disclosure rather than limiting the disclosure. In addition, it should be noted that, for the convenience of description, only some rather than all structures related to the disclosure are illustrated in the accompanying drawings.

Before discussing the exemplary implementations in more detail, it should be mentioned that some exemplary implementations are described as processes or methods of a flowchart. Although in the flowchart, each step is depicted as being processed sequentially, some of these steps may be performed in parallel, concurrently, or simultaneously. In addition, the order of the steps can be rearranged. The process of one step may be terminated when a corresponding operation is completed, but the implementations may also have additional steps that are not illustrated in the drawings. The process may correspond to a method, a function, a procedure, a subroutine, a subprogram, and the like.

It is to be noted that, the device described in the device embodiments of the disclosure is presented in the form of functional modules. The term "module" used herein should be understood as the broadest meaning as possible, and an object for implementing functions defined by each "module" may be, for example, an application specific integrated circuit (ASIC), a single circuit, a processor (shared, dedicated, or chipset) and a memory for executing one or more software or firmware programs, a combinational logic circuit, and/or other suitable components that can achieve the described functions.

With development of terminals, in which more and more applications have been installed, users' requirements for a speed of launching the application are gradually increasing. The user triggers launching of an application by entering an interface having an application icon of the application displayed thereon through a sliding operation and clicking an icon of the application on the interface, or by clicking a notification message in a lock-screen interface. As loading of the application takes a long time, the user still needs to wait for a long time to enter an application interface after the launching of the application is triggered. In addition, the user cannot use other system resources of the terminal during loading of the application, which results in low utilization rate of system resources.

Therefore, a method for preloading an application is provided herein. The method is implemented as follows. A target interface corresponding to a sliding operation is determined when the sliding operation is detected on an interface. An application with a highest preloading priority is determined from applications in the target interface as a target application. The target application is preloaded.

According to the method for preloading an application of the implementations of the present disclosure, the target application in the target interface corresponding to the sliding operation can be preloaded when the sliding operation is detected on the interface. Hence, it is possible to avoid that the target application will not be loaded until the user triggers an instruction for launching an application. Thus, before the user triggers the instruction for launching an application, a time point for preloading is determined according to a push message, and when the time point arrives, preload the target application, then when the user triggers the instruction for launching an application, launch the target application preloaded. In this way, quick launching can be achieved and the speed of launching the target application can be increased. From the user's point of view, since the target application is not loaded in the foreground, the user can perform other operations when the target application is loaded instead of just waiting, thereby improving utilization rate of the system resources. The solution is detailed in the following.

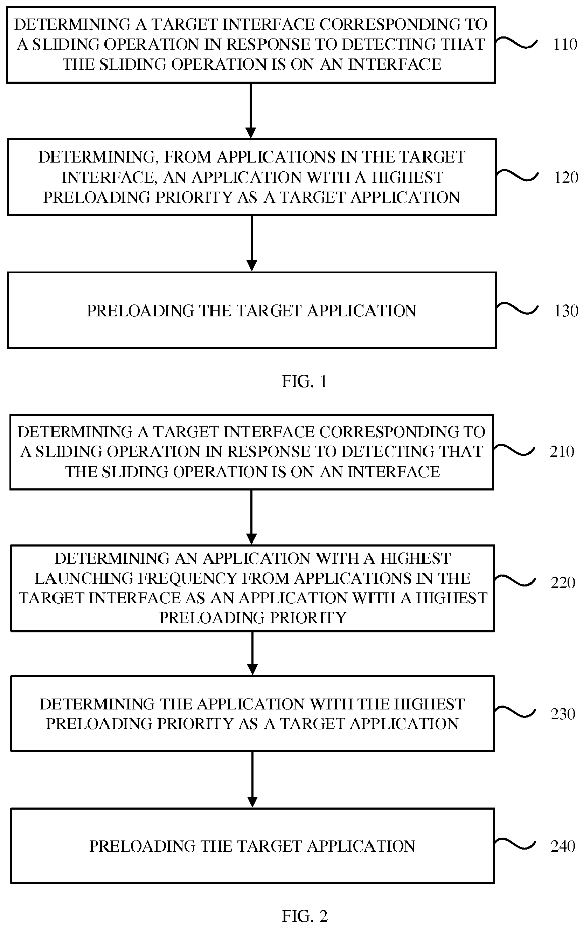

FIG. 1 is a flowchart illustrating a method for preloading an application according to an implementation of the present disclosure. The method is applicable to a case where a terminal launches an application and can be executed by a terminal capable of running applications. The terminal can be a smart phone, a tablet computer, a wearable device, a notebook computer, or the like. The method begins at 110.

At 110, a target interface corresponding to a sliding operation is determined in response to detecting that the sliding operation is on an interface.

At 120, an application with a highest preloading priority is determined from applications in the target interface as a target application.

At 130, the target application is preloaded.

Alternatively, reference can be made to the following detailed description with regards to how the above process is implemented.

First, a target interface(s) corresponding to a sliding operation is determined when the sliding operation is detected on an interface.

If two interfaces (e.g. Interface A and Interface B) are set in the terminal and the sliding operation achieves switching from interface A to interface B, interface B is determined as the target interface.

The sliding operation can be comprehended as sliding from left to right, or from right to left, or possibly even from top to bottom or from bottom to top. In this case, the target interface is in a direction opposite to a sliding direction of the sliding operation. For example, when the sliding operation is sliding to the left, the target interface (here, Interface B) is on the right of the current interface in which the sliding is conducted. Similarly, when the sliding operation is sliding to the right, the target interface (here, Interface B) is on the left of the current interface in which the sliding is conducted.

Alternatively, the sliding operation can be comprehended as in a longitudinal or horizontal direction. In this case, the target interface(s) corresponding to the sliding operation refers to at least one target interface along the sliding direction, that is, along the horizontal direction for example.

Then, a target application is determined from applications in the target interface according to preloading priorities of the applications.

From the applications in the target interface, an application with a highest preloading priority is determined as the target application. The application with the highest preloading priority in the target interface can refer to an application with a highest launching frequency or a most-recently-launched application in the target interface. The preloading priorities of the applications in the target interface can be determined according to a record(s) of user operation. The record of user operation includes applications that have been launched and time points at which these applications are launched. In detail, the record can contain a time period, a name(s) of an application(s) that is launched within the time period, a time point(s) at which the application is launched, the number of times of launching of the application within the time period, and the like. A list of historical launched applications corresponding to a current time point is determined according to the record and an application with the highest launching frequency in the list is determined as the application with the highest preloading priority, i.e., the target application. Alternatively, a sequence of recently-launched applications is determined according to the record and a most-recently-launched application in the sequence is determined as the application with the highest preloading priority, i.e., the target application. It is noted that, terms such as "record", "list", "sequence" herein all refer to information related to launching of the applications and can be replaced with each other without conflict.

Last, the target application is preloaded.

Alternatively, processor and memory resources are allocated for preloading. When the target application is preloaded, a virtual page storage space can be generated by the memory to execute the target application, and when the user clicks an icon of the target application, a result of running of the target application in the virtual page storage space is output. In an implementation, a virtual interface is created and the target application is preloaded in the virtual interface.

According to the method for preloading an application, the target interface corresponding to the sliding operation is first determined when the sliding operation is detected on the interface. Thereafter, the target application is determined from applications in the target interface according to the preloading priorities of the applications. At last, the target application is preloaded. As such, the target application in the target interface corresponding to the sliding operation can be preloaded when the sliding operation is detected on the interface, which thus avoids that the target application will not be preloaded until the user triggers an instruction for launching an application. Thus, before the user triggers the instruction for launching an application, a time point for preloading is determined according to a push message, and when the time point reaches, the target application is preloaded, thereafter when the user triggers the instruction for launching an application, the target application preloaded is launched. In this way, quick launching can be achieved and speed of launching the target application can be increased. From the user's point of view, since the target application is not loaded in the foreground, the user can perform other operations when the target application is loaded instead of just waiting, thereby improving utilization rate of system resources.

FIG. 2 is a flowchart illustrating another method for preloading an application according to an implementation of the present disclosure. As a further description of the foregoing implementation, the method begins at 210.

At 210, a target interface corresponding to a sliding operation is determined in response to detecting that the sliding operation is on an interface.

At 220, an application with a highest launching frequency is determined from applications in the target interface as an application with a highest preloading priority.

At 230, the application with the highest preloading priority is determined as a target application.

At 240, the target application is preloaded.

Alternatively, reference can be made to the following detailed description with regards to how the above process is implemented.

First, a target interface corresponding to a sliding operation is determined when the sliding operation is detected on an interface.

Then, a launching frequency of each of applications in the target interface is acquired.

The number of times of launching of each of the applications within a preset duration is acquired. The preset duration can be at least one day, for example, seven days. The launching frequency is determined according to the number of times of launching and the preset duration.

Thereafter, a target application is determined from the applications in the target interface according to the launching frequency.

An application with the highest launching frequency is determined as the target application.

Last, the target application is preloaded.

According to the method for preloading an application provided herein, the target application can be determined according to the launching frequencies of the applications in the target interface, thereby improving accuracy of preloading and utilization rate of system resources.

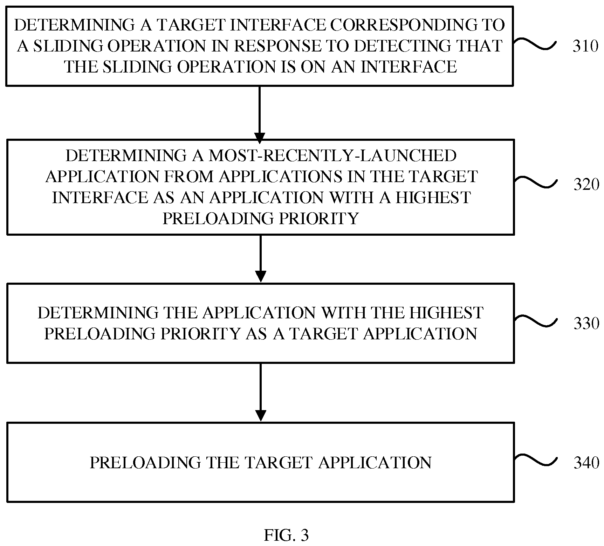

FIG. 3 is a flowchart illustrating another method for preloading an application according to an implementation of the present disclosure. As a further description of the foregoing implementation, the method begins at 310.

At 310, a target interface corresponding to a sliding operation is determined in response to detecting that the sliding operation is on an interface.

At 320, a most-recently-launched application is determined from applications in the target interface as an application with a highest preloading priority.

At 330, the application with the highest preloading priority is determined as a target application.

At 340, the target application is preloaded.

Alternatively, reference can be made to the following detailed description with regards to how the above process is implemented.

First, a target interface corresponding to a sliding operation is determined when the sliding operation is detected on an interface.

Then, a most-recently-launched application in the target interface is acquired.

A sequence or list of recently-launched applications is created for storing information of the recently-launched applications. The recently-launched applications can refer to applications launched within one hour earlier than current time. The most-recently-launched application is determined according to the sequence.

Thereafter, the most-recently-launched application is determined as a target application.

Last, the target application is preloaded.

According to the method for preloading an application of the implementation of the disclosure, the target application can be determined according to the most-recently-launched application in the target interface, thereby improving accuracy of preloading and utilization rate of system resources.

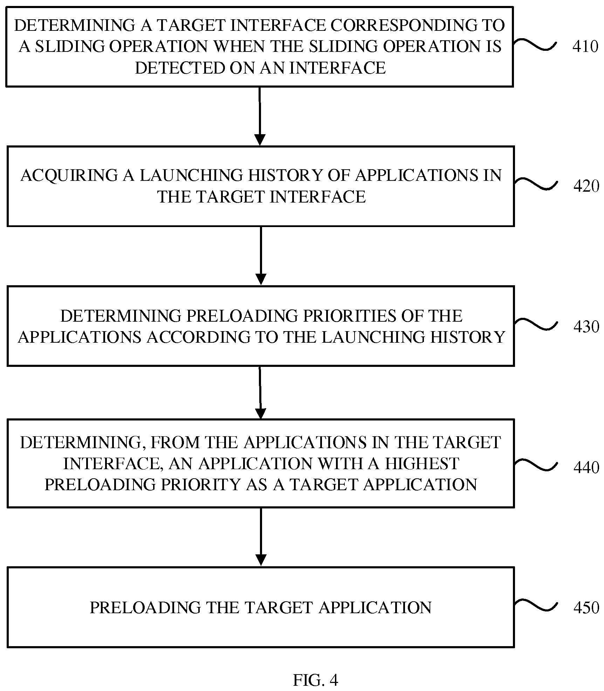

FIG. 4 is a flowchart illustrating another method for preloading an application according to an implementation of the present disclosure. As a further description of the foregoing implementation, the method begins at 410.

At 410, a target interface corresponding to a sliding operation is determined when the sliding operation is detected on an interface.

At 420, a launching history of applications in the target interface is acquired.

At 430, preloading priorities of the applications are determined according to the launching history.

The launching history of the applications (also known as a record of historical launched applications) contains applications that have been launched and time points at which the applications are launched. A list of historical launched applications corresponding to a current time point is determined according to the launching history, and an application with the highest launching frequency in the list is determined as the target application. The launching history further includes installation and uninstallation records for the applications. Preloading priorities of applications with more frequent installation and uninstallation will be degraded.

At 440, an application with a highest preloading priority is determined from the applications in the target interface as a target application.

At 450, the target application is preloaded.

According to the method for preloading an application provided herein, the preloading priorities of the applications in the target interface can be determined according to the launching history, thereby improving accuracy of preloading and utilization rate of system resources.

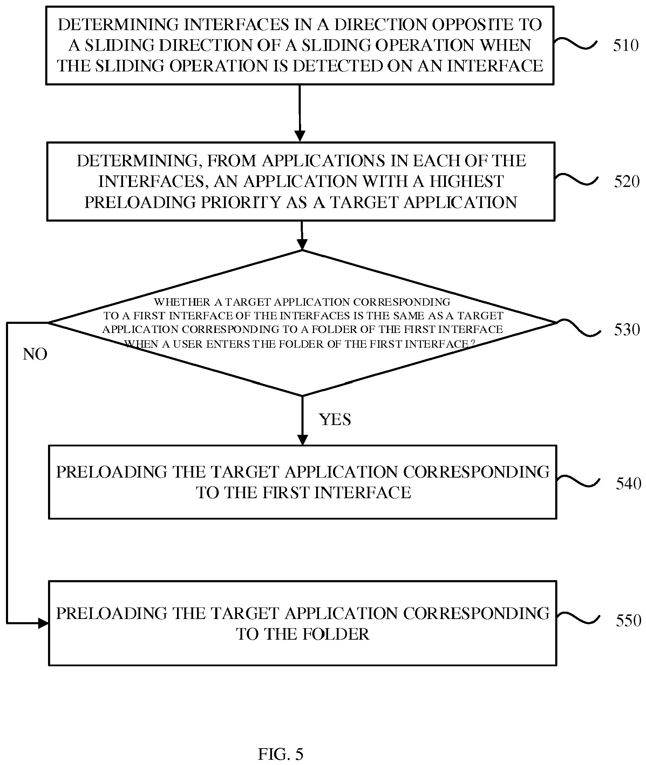

FIG. 5 is a flowchart illustrating another method for preloading an application according to an implementation of the present disclosure. As a further description of the foregoing implementation, the method begins at 510.

At 510, interfaces in a direction opposite to a sliding direction of a sliding operation are determined when the sliding operation is detected on an interface.

If there are multiple interfaces in the direction opposite to the sliding direction of the sliding operation of a user, a target application in each of the multiple interfaces is determined respectively.

At 520, an application with a highest preloading priority is determined from applications in each of the interfaces as a target application.

At 530, whether a target application corresponding to a first interface of the interfaces is the same as a target application corresponding to a folder of the first interface is determined when a user enters the folder of the first interface.

Multiple folders can be arranged in an interface, each containing multiple applications. When the user enters the folder of the first interface, target applications corresponding to other interfaces will not be preloaded. If the user enters a folder in any of the interfaces, a target application corresponding to this folder is determined according to preloading priorities of applications in the folder and an application with the highest preloading priority in this folder is determined as the target application corresponding to this folder.

An application with the highest preloading priority in this folder can refer to an application with the highest launching frequency or a most-recently-launched application in this folder. As an implementation, the target application corresponding to this folder can be determined according to a launching frequency of each of the applications in this folder and an application with the highest launching frequency is determined as the target application corresponding to this folder. As another implementation, a most-recently-launched application in this folder can be determined as the target application corresponding to this folder.

The target application corresponding to the folder can be the same as or different from the target application corresponding to the first interface.

At 540, the target application corresponding to the first interface is preloaded based on a determination that the target application corresponding to the first interface is the same as the target application corresponding to the folder.

At 550, the target application corresponding to the first interface is not preloaded based on a determination that the target application corresponding to the first interface is not the same as the target application corresponding to the folder.

In this case, the target application corresponding to the folder can be preloaded.

According to the method for preloading an application provided herein, the target application can be determined according to the folder selected by the user in the interface, which thus avoids unnecessary preloading, and improves accuracy of preloading and utilization rate of system resources.

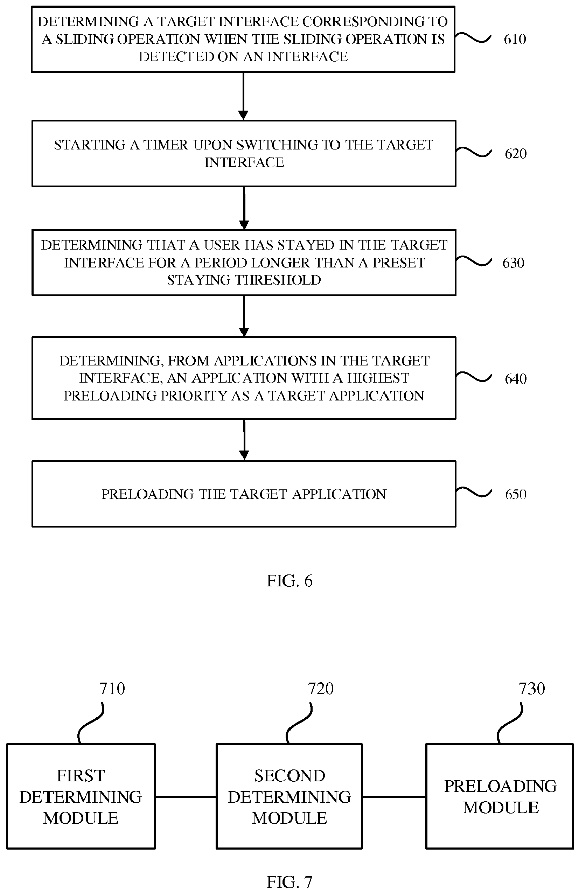

FIG. 6 is a flowchart illustrating another method for preloading an application according to an implementation of the present disclosure. As a further description of the foregoing implementation, the method begins at 610.

At 610, a target interface corresponding to a sliding operation is determined when the sliding operation is detected on an interface.

At 620, start a timer upon switching to the target interface.

At 630, determine that a user has stayed in the target interface for a period longer than a preset staying threshold.

At 640, determine, from applications in the target interface, an application with a highest preloading priority as a target application.

The preset staying threshold can be greater than 1.5 seconds, such as 2 seconds. If the target interface corresponding to the sliding operation of the user is a transitional interface (that is, not the interface that the user really wants), the user usually stays in the transitional interface for less than one second, and in this case, preloading of a target application in the transitional interface is not executed.

At 650, the target application is preloaded.

According to the method for preloading an application of the implementation of the disclosure, the target application can be determined according to the duration the user stays in the target interface, thereby avoiding unnecessary preloading, and improving accuracy of preloading and utilization rate of system resources.

FIG. 7 is a schematic structural diagram illustrating an apparatus for preloading an application according to an implementation of the present disclosure. As illustrated in FIG. 7, the apparatus includes a first determining module 710, a second determining module 720, and a preloading module 730. These modules can be integrated into a processor, a controller, a processing circuit, or a control circuit.

The first determining module 710 is configured to determine a target interface corresponding to a sliding operation when the sliding operation is detected on an interface.

The second determining module 720 is configured to determine, from applications in the target interface, a target application, according to preloading priorities of the applications determined by the first determining module 710.

The preloading module 730 is configured to preload the target application determined by the second determining module 720.

In an implementation, the second determining module 720 is configured to acquire a launching frequency of each of the applications in the target interface and to determine the target application according to the launching frequency.

In an implementation, the second determining module 720 is configured to acquire a most-recently-launched application in the target interface, and to determine the most-recently-launched application as the target application.

In an implementation, the second determining module 720 is configured to acquire a launching history of the applications in the target interface, and to determine the preloading priorities of the applications in the target interface according to the launching history.

In an implementation, the first determining module 710 is configured to determine interfaces in a direction opposite to a sliding direction of the sliding operation. Accordingly, the second determining module 720 configured to determine the target application according to the preloading priorities of applications in the target interface is configured to determine a target application according to preloading priorities of applications in each of the interfaces.

In an implementation, the preloading module 730 is configured to determine whether a target application corresponding to a first interface of the interfaces is the same as a target application corresponding to a folder of the first interface when a user enters the folder of the first interface, and to preload the target application corresponding to the first interface when the target application corresponding to the first interface is the same as the target application corresponding to the folder.

In an implementation, the second determining module 720 is configured to start a timer upon the terminal being switched to the target interface, and to determine the target application according to the preloading priorities of the applications in the target interface when a user has stayed in the target interface for a period longer than a preset staying threshold.

With aid of the apparatus for preloading an application, the first determining module 710 first determines the target interface corresponding to the sliding operation when the sliding operation is detected on the interface; thereafter, the second determining module 720 determines the target application according to the preloading priorities of the applications in the target interface; at last, the preloading module 730 preloads the target application. In this way, the target application in the target interface corresponding to the sliding operation can be preloaded according to the target interface when the sliding operation is detected to be triggered on the interface. It is possible to avoid the case that the target application will not be loaded until the user triggers an instruction for launching an application. Therefore, before the user triggers the instruction for launching an application, a time point for preloading is determined according to a push message, and when the time point arrives, the target application is preloaded, then when the user triggers the instruction for launching an application, the target application preloaded is launched. In this way, quick launching can be achieved and the speed of launching the target application can be increased. From the user's point of view, since the target application is not loaded in the foreground, the user can perform other operations when the target application is loaded instead of just waiting, thereby improving the utilization of the system resources.

The apparatus above can perform the methods of the implementations of the present disclosure, have functional modules configured to perform the methods, and achieve corresponding advantageous effects. For technical details not described in detail in this implementation, reference can be made in the methods of the implementations of the present disclosure.

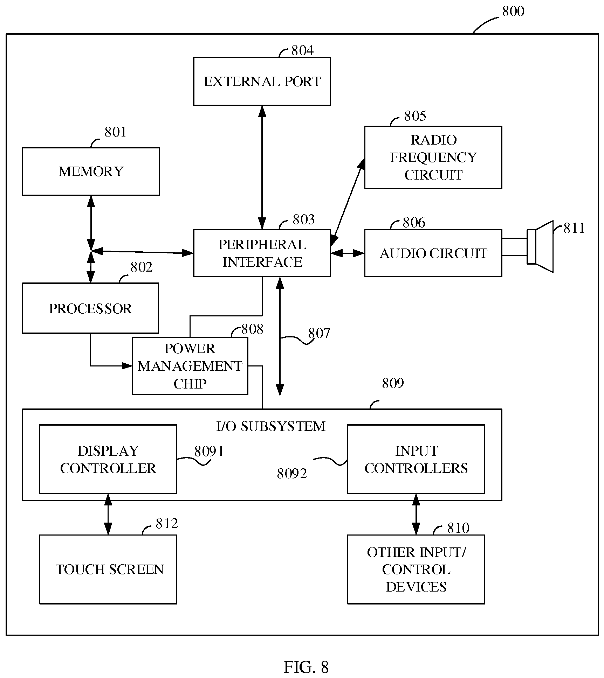

FIG. 8 is a schematic structural diagram illustrating a terminal according to an implementation of the present disclosure. As illustrated in FIG. 8, the terminal includes a housing (not illustrated), a memory 801 (also referred to as a computer readable storage) storing at least one computer executable instruction, at least one central processing unit (CPU) 802 (also referred to as a processor, hereinafter CPU for short) coupled with the memory 801, a circuit board (not illustrated), and a power supply circuit (not illustrated). The circuit board is disposed inside a space defined by the housing. The CPU 802 and the memory 801 are disposed on the circuit board. The power supply circuit is configured to supply power for each circuit or component of the terminal. When executed by the CPU 802, the at least one computer executable instruction stored in the memory 801 causes the CPU 802 to execute the forgoing methods.

The terminal further includes a peripheral interface 803, a radio frequency (RF) circuit 805, an audio circuit 806, a speaker 811, a power management chip 808, an input/output (I/O) subsystem 809, a touch screen 812, other input/control devices 810, and an external port 804, which are communicated via one or more communication buses or signal lines 807.

It should be understood that, the terminal 800 illustrated is merely exemplary and the terminal 800 may have more or fewer components than those illustrated in FIG. 8. For example, two or more components may be combined, or different component configurations can be adopted in the terminal. The various components illustrated in FIG. 8 can be implemented in hardware, software, or a combination thereof which include one or more signal processing and/or application specific integrated circuits.

The following describes a smart phone as an example of the terminal of the implementation of the present disclosure.

The memory 801 is accessible to the CPU 802, the peripheral interface 803, and so on. The memory 801 may include a high-speed random access memory and may further include a non-transitory memory such as one or more magnetic disk storage devices, flash memory devices, or other transitory solid-state memory devices.

The peripheral interface 803 is configured to connect the input and output peripherals of the device to the CPU 802 and the memory 801.

The I/O subsystem 809 is configured to connect the input and the output peripherals such as the touch screen 812 and other input/control devices 810 to the peripheral interface 803. The I/O subsystem 809 may include a display controller 8091 and one or more input controllers 8092 configured to control other input/control devices 810. The one or more input controllers 8092 are configured to receive electrical signals from or send electrical signals to other input/control devices 810, where other input/control devices 810 may include a physical button (a press button, a rocker button, etc.), a dial, a slide switch, a joystick, or a click wheel. It should be noted that the input controller 8092 can be coupled with any of a keyboard, an infrared port, a universal serial bus (USB) interface, and a pointing apparatus such as a mouse.

According to the working principle and the information transmission medium of the touch screen, the touch screen 812 can be a resistive, capacitive inductive, infrared, or surface acoustic wave type. According to the installation manner, touch screen 812 can be external, built-in, or integrated type. According to the technical principle, touch screen 812 can be a vector pressure sensing touch screen, a resistive touch screen, a capacitive touch screen, an infrared touch screen, or a surface acoustic wave touch screen.

The touch screen 812 functions as an input interface and an output interface between a terminal and a user, and is configured to display a visual output to the user. The visual output may include graphics, text, icons, videos, and the like. Alternatively, the display screen 812 is configured to send an electrical signal (e.g., an electronic signal on a contact surface) triggered by the user on the display screen to the processor 802.

The display controller 8091 in the I/O subsystem 809 is configured to receive an electrical signal from or send an electrical signal to the touch screen 812. The touch screen 812 is configured to detect contact or touch on the touch screen. The display controller 8091 is configured to convert the contact detected into an interaction with a user interface object displayed on the touch screen 812, that is, to realize human-computer interaction. The user interface object displayed on the touch screen 812 may be an icon of a running game, an icon indicating connection to corresponding networks, and the like. It should be noted that, the device may also include a light mouse, which is a touch sensitive surface that does not display a visual output, or can be an extension of a touch sensitive surface formed by the touch screen.

The RF circuit 805 is configured to establish communication between a mobile phone and the wireless network (i.e. network side) and to transmit and receive data between the mobile phone and the wireless network, for example, transmit and receive short messages, emails, and the like.

The audio circuit 806 is configured to receive audio data from the peripheral interface 803, to convert the audio data into an electrical signal, and to transmit the electrical signal to the speaker 811.

The speaker 811 is configured to restore the voice signal received by the mobile phone from the wireless network via the RF circuit 805 to sound and to play the sound to the user.

The power management chip 808 is configured for power supply and power management of the hardware connected to the CPU 802, the I/O subsystem 809, and the peripheral interfaces 803.

Implementations of the present disclosure further provide a non-transitory computer readable storage medium. The non-transitory computer readable storage medium is configured to store a computer program which, when executed by a processor, causes the processor to execute the above methods.

The computer storage medium of the implementation of the disclosure may adopt any combination of one or more computer readable mediums. The computer readable medium can be a computer readable signal medium or a non-transitory computer readable storage medium. The non-transitory computer readable storage medium can be, for example, but is not limited to, an electronic, magnetic, optical, electromagnetic, infrared, or semiconductor system, apparatus, or device, or any combination thereof. More specific examples (non-exhaustive) of computer readable storage media include an electrical connection having one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any proper combination thereof. In the present disclosure, the non-transitory computer readable storage medium can be any tangible medium that contains or stores a program(s), which can be used by or in connection with a system, apparatus, or device for instructing an instruction.

A computer readable signal medium may include a data signal(s) that is propagated in a baseband or as part of a carrier, carrying computer readable program codes therein. Such propagated data signals can take a variety of forms which include, but is not limited to, electromagnetic signals, optical signals, or any proper combination thereof. The computer readable signal medium can also be any computer readable medium other than a non-transitory computer readable storage medium. The computer readable medium can be configured to transmit, propagate, or transport a program(s) used by or in connection with a system, apparatus, or device for executing an instruction.

Program codes that are included in the computer readable medium can be transmitted via any proper medium, which includes but is not limited to wireless, a wire, an optical cable, an RF, etc., or any proper combination thereof.

Computer program codes for performing the operations of the present disclosure can be written in one or more programming languages, or a combination thereof. The programming languages include object-oriented programming languages such as Java, Smalltalk, C++, and also include conventional procedural programming languages such as the "C" language or similar programming languages. The program codes may be executed entirely on the user's computer, partly on the user's computer, as a stand-alone software package, partly on the user's computer and partly on a remote computer, or entirely on the remote computer or on a remote server. In the case of the remote computer, the remote computer can be connected with the user's computer through any type of network, including a local area network (LAN) or a wide area network (WAN), or can be connected with an external computer (for example, through the Internet using an Internet service provider).

As to the storage medium including computer executable instructions provided herein, the computer executable instructions are not limited to execute the operations described above and can also execute related operations of the above methods provided by any of the implementations of the present disclosure.

## Claims

1. A method for preloading an application, comprising:
determining (110, 210, 310, 410, 610) a target interface corresponding to a sliding operation in response to detecting that the sliding operation is on an interface;
determining (120, 230, 330, 440, 640), from applications in the target interface, an application with a highest preloading priority as a target application; and
preloading (130, 240, 340, 450, 650) the target application.

2. The method of claim 1, further comprising:
determining (220) an application with a highest launching frequency in the target interface as the application with the highest preloading priority.

3. The method of claim 1, further comprising:
determining (320) a most-recently-launched application in the target interface as the application with the highest preloading priority.

4. The method of claim 1, further comprising:
acquiring (420) a launching history of the applications in the target interface; and
determining (430) preloading priorities of the applications according to the launching history.

5. The method of claim 1, wherein
determining the target interface corresponding to the sliding operation comprises:
determining (510) interfaces in a direction opposite to a sliding direction of the sliding operation; and
determining the application with the highest preloading priority as the target application comprises:
determining (520), from applications in each of the interfaces, an application with a highest preloading priority as a target application.

6. The method of claim 5, wherein preloading the target application comprises:
determining (530) whether a target application corresponding to a first interface of the interfaces is the same as a target application corresponding to a folder of the first interface when a user enters the folder of the first interface; and
preloading (540) the target application corresponding to the first interface based on a determination that the target application corresponding to the first interface is the same as the target application corresponding to the folder.

7. The method of any of claims 1-6, further comprising:
starting (620) a timer upon switching to the target interface; and
determining (630) that a user has stayed in the target interface for a period longer than a preset staying threshold.

8. A terminal, comprising:
at least one processor (802); and
a computer readable storage (801), coupled to the at least one processor and storing at least one computer executable instruction thereon which, when executed by the at least one processor, causes the at least one processor to carry out actions, comprising:
determining a target interface corresponding to a sliding operation in response to detecting that the sliding operation is on an interface;
determining, from applications in the target interface, an application with a highest preloading priority as a target application; and
preloading the target application.

9. The terminal of claim 8, wherein the at least one processor is further configured to carry out actions, comprising:
determining an application with a highest launching frequency in the target interface as the application with the highest preloading priority.

10. The terminal of claim 8, wherein the at least one processor is further configured to carry out actions, comprising:
determining a most-recently-launched application in the target interface as the application with the highest preloading priority.

11. The terminal of claim 8, wherein the at least one processor is further configured to carry out actions, comprising:
acquiring a launching history of the applications in the target interface; and
determining preloading priorities of the applications according to the launching history.

12. The terminal of claim 8, wherein
the at least one processor configured to carry out determining the target interface corresponding to the sliding operation is configured to carry out actions, comprising:
determining interfaces in a direction opposite to a sliding direction of the sliding operation; and
the at least one processor configured to carry out determining the application with the highest preloading priority as the target application is configured to carry out actions, comprising:
determining, from applications in each of the interfaces, an application with a highest preloading priority as a target application.

13. The terminal of claim 12, wherein the at least one processor configured to carry out preloading the target application is configured to carry out actions, comprising:
determining whether a target application corresponding to a first interface of the interfaces is the same as a target application corresponding to a folder of the first interface when a user enters the folder of the first interface; and
preloading the target application corresponding to the first interface based on a determination that the target application corresponding to the first interface is the same as the target application corresponding to the folder.

14. The terminal of any of claims 8-13, wherein the at least one processor is further configured to carry out actions, comprising:
starting a timer upon switching to the target interface; and
judging that a user has stayed in the target interface for a period longer than a preset staying threshold.

15. A non-transitory computer readable storage medium, storing a computer program which, when executed by a processor, causes the processor to carry out the method of any of claims 1-7.
